# EUROPÄISCHE PATENTSCHRIFT

(11) **EP 0 956 764 B1**
(45) Veröffentlichungstag und Bekanntmachung des Hinweises auf die Patenterteilung: **13.06.2001**
(21) Anmeldenummer: 99105475.0
(22) Anmeldetag: 17.03.1999
(51) Int. Cl.: A01K 1/015

(54) **Längsspaltenrostelement für einen Stallanlagenfussboden**
Grid floor element for stable floor
Elément de caillebotis pour plancher d'étable

(30) Priorität: 12.05.1998 DE 19821198
(43) Veröffentlichungstag der Anmeldung: 17.11.1999
(73) Patentinhaber: Schwarz, Rudolf Dipl.-Ing., 84543 Winhöring (DE)
(72) Erfinder: Schwarz, Rudolf Dipl.-Ing., 84543 Winhöring (DE)
(74) Vertreter: Finck, Dieter, Dr.Ing.

(56) Entgegenhaltungen:
- DE-U- 1 882 262

## Beschreibung

Die Erfindung betrifft ein Längsspaltenrostelement für einen Stallanlagenfußboden nach dem Oberbegriff des Patentanspruchs 1 sowie die Lauffläche eines Stalls aus solchen Längsseitenrostelementen mit stirnseitigen Abschlußplatten nach Anspruch 5.

Aus der DIN 18 908 (Mai 1992) ist ein Rostelement für einen Stallanlagenfußboden und insbesondere für die Lauffläche eines Stalls bekannt, das aus einer rechteckigen Platte mit zwei kurzen Auflageseiten und zwei langen Stoßschlitzseiten besteht und in der im wesentlichen rechteckige Schlitze ausgebildet sind, die in zu den Stoßschlitzseiten parallelen Reihen angeordnet sind. Die Abstände der Schlitzreihen voneinander und die Abstände der Schlitze in den Reihen sowie parallel zu den Auflageseiten und den Stoßschlitzseiten sind bezogen auf Fußform und Gewicht der im Stall gehaltenen Tiere in der Norm festgelegt. So beträgt beispielsweise die Breite der Schlitze für Rinder 35 mm, für Jungrinder 30 mm und für Kälber 25 mm, wobei der Abstand zwischen den Schlitzen größer als 70 mm sein muß, so daß sich Verhältnisse aus Schlitzbreite und Abstand der Schlitze von 2; 2,3 bzw. 2,8 ergeben. Die Länge der Schlitze ergibt sich aus der für die Längsspaltenrostelemente erforderlichen Festigkeit, wobei von Gewichten für Rinder und Jungrinder von 450 Kg und für Kälber von bis zu 250 Kg ausgegangen wird. An den Auflageseiten haben die Platten Überstände, die bei aneinandergelegten Platten aneinanderstoßen, während die abgesetzten Stoßschlitzseiten zweier aneinandergelegter Platten zwischen sich einen durchgehenden Längsschlitz bilden, der sich bei den bekannten Längsspaltenrosten senkrecht zur Hauptbewegungsrichtung der Tiere auf der Lauffläche erstreckt.

Die DIN 18 908 (Mai 1992) weist auch Querspaltenrostelemente als bekannt aus, bei denen sich die Schlitze parallel zu den Auflageseiten durchgehend erstrecken und in Abständen von den Stoßschlitzseiten enden, die zumindest denen zwischen den Schlitzen entsprechen und für die die gleichen Vorschriften wie für die Längsspaltenrostelemente gelten.

Das DE 18 82 262 U bezieht sich auf Abdeckplatten für Jaucherinnen, die als Strang oberhalb der Jaucherinne verlegt werden und die Öffnungsschlitze für den Ablauf von Jauche nach unten in die Rinne aufweisen. Die Stoßseiten der Abdeckplatten sind zur Längsrichtung der Jaucherinne schräg in einem Winkel von etwa 45° geneigt oder unter diesem Winkel pfeilförmig ausgebildet. Mit dieser schrägen oder pfeilförmigen Ausbildung der Stoßseiten soll erreicht werden, daß halb- oder vollautomatisch arbeitende Entmistungsanlagen störungsfrei, d.h. ohne zu verhaken, über die Abdeckplatten gleiten können, um den Mist in einen angrenzenden Entmistungsschacht zu befördern. Da die Entmistungsanlage den Mist über die Abdeckplatten in den Entmistungsschacht befördert, müssen die Tiere auf einem festen Stallboden, möglichst senkrecht zur Jaucherinne stehen, und wird der Mist aus diesem Bereich mit der Entmistungsanlage zunächst über die Abdeckplatten der Jaucherinne für den Ablauf der Jauche befördert, ehe er in den Entmistungsschacht geführt wird.

Die bekannte Abdeckplatte kann unter Bezug auf DIN 18 908 allenfalls als Querspaltenrostelement mit zwei gegenüberliegenden langen Auflageseiten und zwei schmalen Stoßseiten betrachtet werden, wobei die Stoßseiten von aneinanderliegenden Abdeckplatten direkt aneinanderliegen, also keinen zusätzlichen stoßseitigen Ablaufschlitz bilden. Die Schlitze für den Jaucheablauf verlaufen parallel zu den langen Auflageseiten, die mit den geneigten Schmalseiten der Abdeckplatte eine Parallelogrammform ergeben.

Studien haben gezeigt, daß die Tiere sich sehr vorsichtig und offensichtlich gehemmt über Laufflächen aus den bekannten Längsspaltenrosten und Querspaltenrosten bewegen, bei denen die Schlitze sich quer zur oder direkt in der Bewegungsrichtung der Tiere erstrecken.

Aus dem DE 295 11 551 U1 ist ein Querspaltenrostelement in Form einer rechteckigen Platte mit Auflageseiten und Stoßschlitzseiten bekannt, bei der die Querschlitze zu den Stoßschlitzseiten in einem spitzen Winkel geneigt sind. Dadurch sind die Querschlitze des Querspaltenrostelements schräg zur Laufrichtung der Tiere geneigt, nicht jedoch die sich quer zur Laufrichtung erstreckenden Schlitze, die zwischen den langen Stoßschlitzseiten gebildet werden.

Die der Erfindung zugrundeliegende Aufgabe besteht nun darin, Spaltenrostelemente für Stallanlagenfußböden und insbesondere für die Laufflächen im Stall bereitzustellen, die sich einfach aus Beton herstellen und so verlegen lassen, daß alle Schlitze in einem Winkel zur Hauptlaufrichtung der Tiere auf den Laufflächen angeordnet sind.

Diese Aufgabe wird mit dem Längsspaltenrostelement gelöst, wie es im Patentanspruch 1 beschrieben ist.

Dadurch, daß die Platte die Form eines Parallelogramms hat, erstrecken sich die Auflageseiten fluchtend zueinander und bilden die seitliche Begrenzung der Lauffläche oder für weitere daran anstoßende Längsspaltenrostelemente, wobei sich die durchgehenden Schlitze zwischen den Stoßschlitzseiten in der gleichen Richtung wie die in Reihen angeordneten Schlitze in den Platten erstrecken. Die obere Grenze für den spitzen Winkel ergibt die Schrägstellung der Stoßschlitze und der Schlitzreihen, die für das Laufen der Tiere noch komfortabel ist, während sich die untere Grenze für den spitzen Winkel aus der Länge der Längsspaltenroste ergibt, die bei sinnvollem Materialaufwand eine ausreichende Festigkeit ermöglicht. Der unter diesen beiden Gesichtspunkten günstigste spitze Winkel, der zwischen zwei diametral gegenüberliegenden Ecken der parallelogrammförmigen Platte eingeschlossen ist, liegt bei etwa 60°.

Vorteilhafterweise haben die Schlitze gleiche Längen, d.h. ihre Enden liegen auf Parallelen zu den Auflageseiten. Die auflageseitigen Schlitze können aber auch unterschiedliche Längen haben. Die der Auflageseite zugewandten Enden der Schlitze haben bei dieser Ausgestaltung gleiche, DIN 18 908 entsprechende Abstände zu der Auflageseite. Die anderen Enden der Schlitze liegen jeweils auf gedachten zu den Stoßschlitzseiten der Platten senkrechten Linien. Die Schlitze in der gleichen Reihe haben gleiche Abstände zueinander haben, die DIN 18 908 genügen. Das bedeutet, daß die zwischen den auflageseitigen Schlitzen in der Platte ausgebildeten Schlitze gleiche Länge haben.

Die Stallböden und insbesondere die Laufflächen eines Stalls enden in der Regel in einer Stirnwand, die sich senkrecht zur Laufrichtung erstreckt. Deshalb wird an den stirnseitigen Enden einer Lauffläche aus den erfindungsgemäßen parallelogrammförmigen Platten jeweils wenigstens eine Abschlußplatte in Form eines Trapezes vorgesehen, deren eine laufflächenstirnseitige Stoßschlitzseite als Höhe des Trapezes mit der Auflageseite einen Winkel von 90° einschließt, also dem Wandabschluß entspricht, und deren andere Stoßschlitzseite sich parallel zu den Stoßschlitzreihen der parallelogrammförmigen Platten erstreckt. Dabei werden vorteilhafterweise die sich im wesentlichen in Richtung der Stoßschlitzseiten erstreckenden Schlitzreihen so vorgesehen, daß sie einen kontinuierlich von 90° bis *α* abnehmenden Winkel mit der einen Auflageseite einschließen, wobei *α* der spitze Parallelogrammwinkel ist.

Wenn der spitze Winkel *α* der Parallelogrammplatten im unteren Grenzbereich liegt, wird die Abschlußplatte vorteilhafterweise in zwei trapezförmige Plattenelemente unterteilt, deren aneinanderliegende Stoßschlitzseiten mit ihren einen Auflageseiten einen Winkel von (90 + α)/ 2 einschließen, wobei die Winkel der Stoßschlitzreihen, wie vorstehend beschrieben, kontinuierlich geändert bzw. angeglichen werden.

Die erfindungsgemäßen Längsspaltenrostelemente und die mit ihnen gestaltete Lauffläche für einen Stall ermöglichen ein von den Tieren sichtbar akzeptiertes Laufen bei ausreichender Tragfestigkeit und zureichender Ablauffläche durch die Schlitze, sowie bei für die Klauen der Tiere ausreichender Rauhigkeit.

Anhand einer Zeichnung wird ein Ausführungsbeispiel der Erfindung näher erläutert, in der
- Fig. 1: in der Draufsicht den stirnseitigen Abschnitt einer Lauffläche für einen Stallfußboden bestehend aus zwei Anschlußplatten und einem erfindungsgemäßen Längsspaltenrostelement,
- Fig. 2: den Schnitt II-II von Fig. 1 und
- Fig. 3: eine Draufsicht auf einen Teil eines bezüglich der Schlitzanordnung modifizierten Längsspaltenrostelements zeigt.

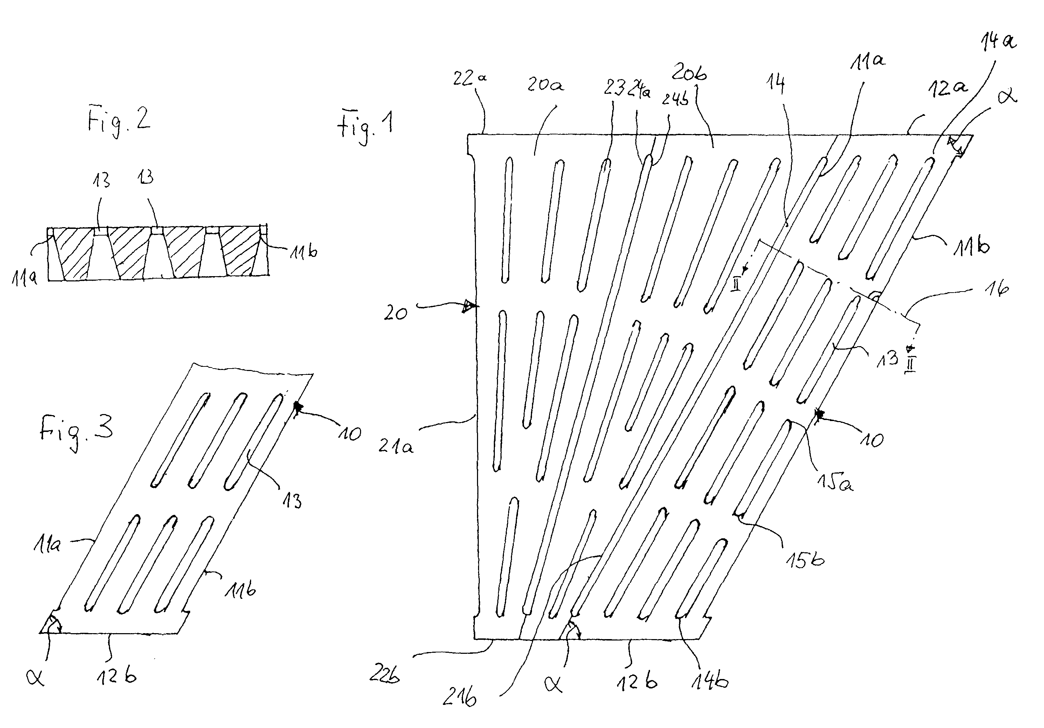

Das in Fig. 1 gezeigte Längsspaltenrostelement 10, das aneinanderliegend eine Lauffläche bildet, besteht aus einer Platte 10 in Form eines Parallelogramms mit zwei kurzen Auflageseiten 12a und 12b und zwei langen Stoßschlitzseiten 11a und 11b, wobei zwei diametral gegenüberliegende Ecken der parallelogrammförmigen Platte 10 einen spitzen Winkel *α* zwischen sich einschließen, der bei der gezeigten Ausführungsform etwa 60° beträgt. Die Platten 10 stehen im Bereich der Auflageseiten 12a und 12b etwas über die Stoßschlitzseiten 11b und 11a vor, so daß aneinandergelegte Platten 10 im Bereich der Auflageseiten 12a und 12b aneinanderstoßen und daran anschließend zwischen sich einen Stoßschlitz 14 bilden. Jede parallelogrammförmige Platte 10 hat Schlitze 13, die in voneinander beabstandeten Reihen in Richtung der Stoßschlitze 14 fluchtend angeordnet sind, wobei die Abstände zwischen den Reihen ebenso wie die Abstände zwischen den Schlitzen 13 jeder Reihe und den Außenseiten 12a und 12b sowie den Stoßschlitzseiten 11a und 11b den Vorgaben der DIN 18 908 entsprechen.

Bei dem gezeigten Ausführungsbeispiel sind die Schlitze 13 jeder parallelogrammförmigen Platte 10 in drei Reihen angeordnet, wobei je Reihe vier Schlitze 13 vorgesehen sind. Die auflageseitigen Schlitze 13 haben eine unterschiedliche Länge dadurch, daß ihre den Auflageseiten 12a und 12b zugewandten Enden 14a und 14b gleichen Abstand zu den Auflageseiten 12a und 12b haben und daß ihre anderen Ränder auf einer zu den Stoßschlitzseiten 11a und 11b gedachten senkrechten Linie 16 liegen. Die übrigen Schlitze 13 zwischen den auflageseitigen Schlitzen 13 liegen mit ihren Enden ebenfalls auf solchen Linien 16, so daß sie gleiche Abstände zueinander haben.

In der Ausgestaltung von Fig. 3 sind die Schlitze 13 in der Platte 10 gleich lang. Die Abstände zwischen den Schlitzen und zu den Auflageseiten 12b sowie zu den Stoßschlitzseiten 11a und 11b sind ebenfalls gleich groß. Die Enden der Schlitze 13 liegen auf zu den Auflageseiten 12b parallelen gedachten Linien.

Aus dem Querschnitt durch die parallelogrammförmige Platte 10 von Fig. 2 wird ersichtlich, daß sich die Schlitze 13 sowie die zwischen den Stoßschlitzseiten 11a und 11b aneinandergrenzender Platten 10 gebildeten Stoßschlitze 14 von der Oberseite jeder Platte 10 zu ihrer Unterseite hin linear erweitern.

Da die Stallböden und somit auch die Laufflächen in der Regel von zueinander rechtwinklig angeordnet Wänden begrenzt werden, wird gemäß Fig. 1 die von den parallelogrammförmigen Platten 10 gebildete Lauffläche im Stall an ihren stirnseitigen Enden von einer Abschlußplatte 20 in Form eines Trapezes begrenzt, deren wandseitige Stoßschlitzseite 21a als Trapezhöhe mit der Auflageseite 22a und 22b jeweils einen rechten Winkel bildet und damit parallel zur Wand verläuft, während ihre andere Stoßschlitzseite 21b in dem spitzen Winkel *α* zur Auflageseite 21b geneigt ist, so daß mit der angrenzenden parallelogrammförmigen Platte 10 ein zu deren Stoßschlitzseite 11a paralleler Stoßschlitz 14 gebildet wird.

Bei dem gezeigten Ausführungsbeispiel ist die Abschlußplatte 20 in zwei Plattenelemente 20a und 20b unterteilt, deren Stoßschlitzseiten 24a und 24b einen Winkel mit der einen Auflageseite 22b einschließen, der das Mittel zwischen 90° und dem spitzen Winkel *α* der parallelogrammförmigen Platte 10 ist. Die Schlitze 23 der in die Plattenelemente 21a und 22b unterteilten Abschlußplatte 20 sind dabei wieder in Reihen angeordnet, wobei sich der spitze Winkel, den jede Reihe von Spalten 23 mit der einen Schmalseite 22b bildet, ausgehend von der wandparallelen Stoßschlitzseite 21a mit 90° auf den spitzen Winkel *α* der parallelogrammförmigen Platte 10 linear abnimmt. Hierbei sind die Längen der Schlitze 23 so bemessen, daß die erforderliche Festigkeit der Abschlußplatte 20 gewährleistet ist, jedoch ein ausreichender Ablaufquerschnitt durch die Schlitze 23 bereitgestellt wird. Bei dem gezeigten Ausführungsbeispiel hat das wandseitige Plattenelement 20a ausgehend von der einen Auflageseite 22b nur einen Schlitz, auf der gegenüberliegenden Auflageseite 22a drei Schlitze und dazwischen ebenfalls drei Schlitze, von denen der mittlere Schlitz kürzer ist, da der eine Schlitz zur mittleren Reihe fluchtet. Eine ähnliche Schlitzanordnung in drei Reihen ist bei dem zweiten Plattenelement 20b vorgesehen, wobei die Winkelabstände zwischen den Schlitzenreihen etwas weniger als 4° betragen.

## Patentansprüche

1. Längsspaltenrostelement für einen Stallanlagenfußboden, insbesondere für die Laufflächen eines Stalls, das aus einer im wesentlichen viereckigen Platte (10) mit zwei zueinander parallelen kurzen Auflageseiten (12a, 12b) und zwei zueinander parallelen langen Stoßschlitzseiten (11a, 11b) besteht und sich im wesentlichen in Richtung der Stoßschlitzseiten (11a, 11b) erstreckende Reihen von Schlitzen (13) aufweist, deren Größe und deren Abstände zueinander sowohl in Richtung der Stoßschlitzseiten (11a, 11b) als auch der Auflageseiten (12a, 12b) an die Füße und das Gewicht der im Stall gehaltenen Tiere angepaßt sind, dadurch gekennzeichnet, daß jede Platte (10) die Form eines Parallelogramms hat, dessen diametral gegenüberliegende eingeschlossenen spitzen Winkel (α) jeweils 70° bis 50° betragen.

2. Längsspaltenrostelement nach Anspruch 1, dadurch gekennzeichnet, daß der diametral gegenüberliegende eingeschlossene spitze Winkel (α) jeder parallelogrammförmigen Platte 60° beträgt.

3. Längsspaltenrostelement nach Anspruch 1 oder 2, dadurch gekennzeichnet, daß die Schlitze (13) gleiche Längen und gleiche Abstände zueinander, zu den Auflageseiten (12b) und zu den Stoßschlitzseiten (11a, 11b) haben.

4. Längsspaltenrostelement nach Anspruch 1 oder 2, dadurch gekennzeichnet, daß die den Auflageseiten (12a, 12b) direkt zugewandten Enden (14a, 14b) der in Reihen angeordneten Schlitze (13) jeweils einen gleichen Abstand zu den angrenzenden Auflageseiten (12a, 12b) haben.

5. Längsspaltenrostelement nach Anspruch 4, dadurch gekennzeichnet, daß die Enden (15a, 15b) der in Reihen angeordneten Schlitze (13), die den Auflageseiten (12a, 12b) nicht direkt zugewandt sind, auf zu den Stoßschlitzseiten (11a, 11b) senkrechten gedachten Linien (16) liegen.

6. Lauffläche eines Stalls aus mit ihren Stoßschlitzseiten (11a, 11b) aneinanderliegenden Längsspaltenrostelementen in Form der parallelogrammförmigen Platten (10) nach einem der Ansprüche 1 bis 5, wobei die Lauffläche an ihren stirnseitigen Enden jeweils wenigstens eine Abschlußplatte (20) in Form eines Trapezes aufweist, deren eine laufflächenstirnseitige Stoßschlitzseite (21a) als Höhe des Trapez mit der Auflageseite (22a, 22b) einen Winkel von 90° einschließt und deren anderen Stoßschlitzseite (21b) sich parallel zu den Stoßschlitzseiten (11a, 11b) der parallelogrammförmigen Platten (10) erstreckt und deren sich im wesentlichen in Richtung der Stoßschlitzseiten (21a, 21b) erstreckende Schlitzreihen (23) linear von 90° bis zu dem spitzen Winkel (α) abnehmen, den die diametral gegenüberliegenden Ecken der parallelogrammförmigen Platte (10) einschließen.

7. Lauffläche nach Anspruch 6, dadurch gekennzeichnet, daß die Abschlußplatte (20) von wenigstens zwei trapezförmigen Plattenelementen (20a, 20b) gebildet wird, deren aneinanderliegende Stoßschlitzseiten (24a, 24b) mit ihren einen Auflageseiten (22b) einen Winkel von (90 + *α*)/2 einschließen.

## Claims

1. Longitudinally slotted grid element for the floor of a stable, especially for the bearing surfaces of a stable, which grid element consists of a substantially quadrilateral plate (10) having two short supporting sides (12a, 12b) which are parallel to each other and two long abutting slot sides (11a, 11b) which are parallel to each other, and which has rows of slots (13) extending substantially in the direction of the abutting slot sides (11a, 11b), the size and the spacing of the slots in the direction both of the abutting slot sides (11a, 11b) and of the supporting sides (12a, 12b) being adapted to the feet and to the weight of the animals kept in the stable, characterised in that each plate (10) has the shape of a parallelogram, the diametrally opposed enclosed acute angles (α) of which are in each case from 70° to 50°.

2. Longitudinally slotted grid element according to claim 1, characterised in that the diametrally opposed enclosed acute angle (α) of each parallelogram-shaped plate is 60°.

3. Longitudinally slotted grid element according to claim 1 or 2, characterised in that the slots (13) are of the same length and are at the same distance from one another, from the supporting sides (12b) and from the abutting slot sides (11a, 11b).

4. Longitudinally slotted grid element according to claim 1 or 2, characterised in that the ends (14a, 14b) of the slots (13) arranged in rows that are directly facing the supporting sides (12a, 12b) are each at the same distance from the adjacent supporting sides(12a, 12b).

5. Longitudinally slotted grid element according to claim 4, characterised in that the ends (15a, 15b) of the slots (13) arranged in rows that are not directly facing the supporting sides (12a, 12b) lie on imaginary lines (16) perpendicular to the abutting slot sides (11a, 11b).

6. Bearing surface of a stable consisting of longitudinally slotted grid elements in the form of the parallelogram-shaped plates (10) according to any one of claims 1 to 5 arranged with their abutting slot sides (11a, 11b) adjacent to one another, the bearing surface having at its front ends in each case at least one end plate (20) in the form of a trapezium, of which one abutting slot side (21a) at the bearing surface end encloses an angle of 90° with the supporting side (22a, 22b) at the top of the trapezium, and of which the other abutting slot side (21b) extends parallel to the abutting slot sides (11a, 11b) of the parallelogram-shaped plates (10), and of which the rows of slots (23) extending substantially in the direction of the abutting slot sides (21a, 21b) decrease linearly from 90° to the acute angle (α) enclosed by the diagonally opposed corners of the parallelogram-shaped plate (10).

7. Bearing surface according to claim 6, characterised in that the end plate (20) is formed by at least two trapezoidal plate elements (20a, 20b), the adjacent abutting slot sides (24a, 24b) of which enclose with their one supporting side (22b) an angle of (90 + α)/2.

## Revendications

1. Elément de caillebotis à fentes allongées pour un plancher d'étable, en particulier pour une surface de marche d'étable, constitué d'une plaque (10) essentiellement quadrangulaire qui présente deux courts côtés de pose (12a, 12b) parallèles l'un à l'autre et deux longs côtés de jonction à fente (11a, 11b) parallèles l'un à l'autre, et des rangées de fentes (13) qui s'étendent essentiellement dans la direction des côtés de jonction à fente (11a, 11b) et dont la taille et les écarts mutuels, tant dans la direction des côtés de jonction à fente (11a, 11b) que dans celle des côtés de pose (12a, 12b), sont adaptés aux pieds et au poids des animaux maintenus dans l'étable, caractérisé en ce que chaque plaque (10) a la forme d'un parallélogramme dont les angles aigus (α) diamétralement opposés sont chacun de 70° à 50°.

2. Elément de caillebotis à fentes allongées selon la revendication 1, caractérisé en ce que les angles aigus (α) diamétralement opposés de chaque plaque en forme de parallélogramme sont de 60°.

3. Elément de caillebotis à fentes allongées selon la revendication 1 ou 2, caractérisé en ce que les fentes (13) ont les mêmes longueurs et les mêmes distances l'une par rapport à l'autre, par rapport au côté de pose (12b) et par rapport aux côtés de jonction à fente (11a, 11b).

4. Elément de caillebotis à fentes allongées selon la revendication 1 ou 2, caractérisé en ce que les extrémités (14a, 14b), directement tournées vers les côtés de pose (12a, 12b), des fentes (13) disposées en rangées sont chaque fois à même distance par rapport aux côtés de pose (12a, 12b) adjacents.

5. Elément de caillebotis à fentes allongées selon la revendication 4, caractérisé en ce que les extrémités (15a, 15b) des fentes (13) disposées en rangées qui ne sont pas tournées directement vers les côtés de pose (12a, 12b) sont situées sur des lignes imaginaires (16) perpendiculaires aux côtés de jonction à fente (11a, 11b).

6. Surface de marche d'une étable, constituée d'éléments de caillebotis à fentes allongées posés les uns contre les autres par leur côté de jonction à fente (11a, 11b) et configurés sous la forme des plaques (10) en parallélogramme selon l'une des revendications 1 à 5, la surface de marche présentant sur ses extrémités frontales chaque fois au moins une plaque terminale (20) en forme de trapèze dont l'un des côtés de jonction à fente (21 a) situé du côté frontal de la surface de marche forme en tant que hauteur du trapèze un angle de 90° avec le côté de pose (22a, 22b), dont l'autre côté de jonction à fente (21b) s'étend parallèlement aux côtés de jonction à fente (11a, 11b) des plaques (10) en forme de parallélogramme et dont les rangées de fentes (23) qui s'étendent essentiellement dans la direction des côtés de jonction à fente (21a, 21b) forment un angle qui diminue linéairement de 90° jusqu'à l'angle aigu (α) qui est formé par les coins diamétralement opposés de la plaque (10) en forme de parallélogramme.

7. Surface de marche selon la revendication 6, caractérisée en ce que la plaque terminale (20) est formée par au moins deux éléments de plaque (20a, 20b) en forme de trapèze dont les côtés de jonction à fente (24a, 24b) adjacents forment avec les uns (22b) de leurs côtés de pose un angle de (90 + α)/2.
